# EUROPÄISCHE PATENTANMELDUNG

(11) **EP 0 814 553 A2**
(43) Veröffentlichungstag der Anmeldung: **29.12.1997**
(21) Anmeldenummer: 97110083.9
(22) Anmeldetag: 20.06.1997
(51) Int. Cl.: H02G 3/04

(54) **Rohr mit axialem Schlitz**

(30) Priorität: 22.06.1996 DE 19624984
(71) Anmelder: Murrplastik System-Technik GmbH, 71567 Oppenweiler (DE)
(72) Erfinder: Ehmann, Bruno, 73563 Mögglingen (DE); Funk, Rainer, 71543 Wüstenrot (DE); Hölzl, Horst, 71672 Marbach (DE)
(74) Vertreter: Jeck, Anton, Dipl.-Ing.

(57) **Zusammenfassung**

Die Erfindung betrifft ein Rohr (10,12) mit axialem Schlitz (14 bis 20) und aus elastisch verformbarem Werkstoff. Der Schlitz (14 bis 20) weist einen von Linie verschiedenen Verlauf auf.

## Beschreibung

Die Erfindung betrifft ein Rohr nach dem Oberbegriff des Anspruches 1.

Rohre sind lange, an den Enden offene Hohlkörper mit meist kreisförmigem Querschnitt und im Vergleich zum Durchmesser geringer Wanddicke. Sie können für unterschiedliche Zwecke eingesetzt werden und bestehen aus Stahl, Kunststoff, Gußeisen oder dergleichen.

Plastrohre der eingangs genannten Art werden regelmäßig durch Strangpreß-Verfahren hergestellt und haben einen Schlitz, der entweder parallel zur oder um die Längsmittelachse des Rohres verläuft. Der Vorteil solcher und z.B. in der US-A-4 384 167 beschriebenen Schläuche besteht darin, daß sie mit geringem Aufwand und ohne zusätzliches Werkzeug geöffnet und z.B. mit elektrischen Leitern bestückt werden können. Übt der Schlauch während seines betriebsgemäßen Einsatzes Hin- und Herbewegungen aus, wobei mindestens eine Umlenkstelle vorhanden ist, dann besteht die Gefahr, daß im Bereich dieser Umlenkstelle sich der Schlitz so öffnet, daß die aufgenommenen Leiter aus dem Schlauch zumindest teilweise gelangen, was unerwünscht ist.

Ausgehend von dem obigen Stand der Technik liegt der Erfindung die Aufgabe zugrunde, das gattungsgemäße Rohr ohne unangemessenen konstruktiven Aufwand so weiterzubilden, daß das Einbringen der Leiter weiterhin problemlos erfolgt, während ein Herausfallen der Leiter aus dem Schlauch praktisch vermieden wird.

Die gestellte Aufgabe wird erfindungsgemäß durch die Merkmale des Anspruches 1 gelöst.

Man erkennt, daß die Erfindung jedenfalls dann verwirklicht ist, wenn es sich um einen regelmäßig aus Kunststoff bestehenden Schlauch, vorzugsweise Wellenschlauch, oder ein Rohr zum Führen und/oder Aufnehmen von Energieleitern, insbesondere Kabeln, Leitungen oder Schläuche, von einem festen Anschluß zu einem beweglichen Verbrauch handelt, wobei der Schlauch mit den Energieleitern so bestückt wird, daß der in Längsrichtung des Schlauches sich erstreckende Schlitz geöffnet und nach Einlegen der Energieleiter wieder geschlossen wird, was sich auf Grund der Elastizität des Kabels ergibt. Dadurch, daß der Schlitz einen von einer Geraden verschiedenen und erfindungsgemäßen Verlauf aufweist, wird gewährleistet, daß der Schlitz in beliebigen Betriebspositionen (auch Torsion) des Rohres sich nicht so öffnet, daß die aufgenommene Leiter das Rohr (Schlauch) verlassen können. Dies wird insbesondere durch die besondere Form und Wahl des Schlitzes definierten Wellen bzw. Täler verhindert. Dabei ist auch bei maximal gebogenen Schläuchen, Rohren die lichte Breite des Schlitzes kleiner als der Durchmesser der aufgenommenen Leitung.
Weitere zweckmäßige und vorteilhafte Ausgestaltungen der Erfindung gehen aus den Unteransprüchen hervor.

Eine besonders zweckmäßige Ausgestaltung sieht vor, daß der Schlitzverlauf wellen- oder zick-zack-förmig ist. Dabei können diese Maßnahmen auch so getroffen sein, daß die Längsmittelachse des Schlitzes parallel zu Längsmittelachse des Rohres verläuft. Um sicherzustellen, daß das Rohr trotz des Schlitzes die erforderliche Formstabilität beibehält, sieht eine weitere zweckmäßige Ausgestaltung der Erfindung vor, daß die Amplituden der Wellen sich über weniger als ein Viertel des Rohrumfangs erstrecken. Handelt es sich um Schläuche, die vorzugsweise um weniger als 180° gebogen werden, dann können die Amplituden sich auch um mehr als ein Viertel des Rohrumfangs erstrecken.

Die Amplituden der Wellen bzw. die Höhe der Zacken sind vorzugsweise so gewählt, daß die Breite des Schlitzes im Biegungsbereich des Schlauches kleiner ist als der Durchmesser der aufgenommenen Leitung(en). Um zu verhindern, daß der Schlauch im Biegungsbereich abknickt, sind die Amplituden vorzugsweise so bemessen, daß sie sich nicht über ein Viertel des Schlauchumfangs erstrecken. Die Wahl der Amplituden bzw. der Zackenhöhen ist daher regelmäßig eine Funktion des Kabel-Außendurchmessers, seines Biegungsradius sowie des Durchmessers des Schlauches.

Handelt es sich um ein Rohr mit einem in etwa rechteckförmigen Querschnitt, dann ist es besonders zweckmäßig, wenn der Schlitz nur auf einer Seite des Rohres ausgebildet ist.

Im Rahmen dieses Erfindungsgedankens können die Rohre unterschiedliche Querschnitte aufweisen, wobei es besonders zweckmäßig ist, wenn das Rohr einen kreisrunden, ovalen oder N-eckförmigen Querschnitt aufweist. Wird das Rohr für Energieführungsleiter verwendet, dann ist es besonders vorteilhaft, wenn es als Wellenschlauch ausgebildet ist.

Einige Ausführungsbeispiele der Erfindung sind in der Zeichnung schematisch dargestellt und werden im folgenden näher erläutert. Es zeigen
- Fig. 1: ein Rohr in axialer Draufsicht, dessen Schlitz einen sinusförmigen Verlauf aufweist,
- Fig. 2: einen Querschnitt des Rohres nach Fig. 1,
- Fig. 3: ein weiteres Rohr, dessen Schlitz einen wellenförmigen Verlauf aufweist,
- Fig. 4: einen Querschnitt des Rohres nach Fig. 3,
- Fig. 5: ein Wellenrohr in axialer Draufsicht mit sinusförmigem Schlitz,
- Fig. 6: einen Querschnitt des Rohres nach Fig. 5,
- Fig. 7: ein weiteres Wellenrohr mit wellenförmigem Schlitz und
- Fig. 8: einen Querschnitt des Rohres nach Fig. 7.

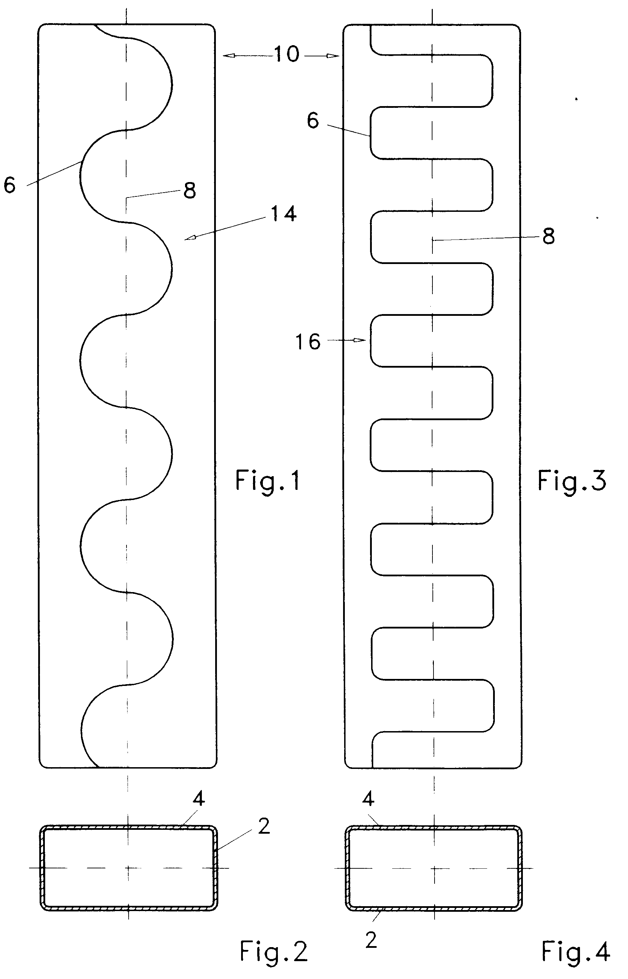

In den Figuren 1 bis 8 sind jeweils Rohre 10 bis 16 mit axialen Schlitzen 14 bis 20 und aus elastisch verformbarem Werkstoff dargestellt. Die Schlitze 14 bis 20 haben einen von einer Geraden verschiedenen Verlauf, sie sind wellenförmig ausgebildet oder haben einen sinusförmigen Verlauf. Die Längsmittelachsen der Schlitze 14 bis 20 verlaufen parallel zu den Längsmittelachsen 8 der Rohre 10 bis 12, wobei die Amplituden 6 der Wellen 14 bis 20 so gewählt sind, daß sie sich über weniger als ein Viertel des Rohrumfangs erstrecken.Man erkennt, daß die Rohre einen rechteckförmigen Querschnitt aufweisen und daß die Schlitze 14 bis 20 nur auf einer Seite 4 des jeweiligen Rohres ausgebildet sind. Allgemein können die Rohre einen kreisrunden, ovalen oder N-eckförmigen Querschnitt aufweisen.

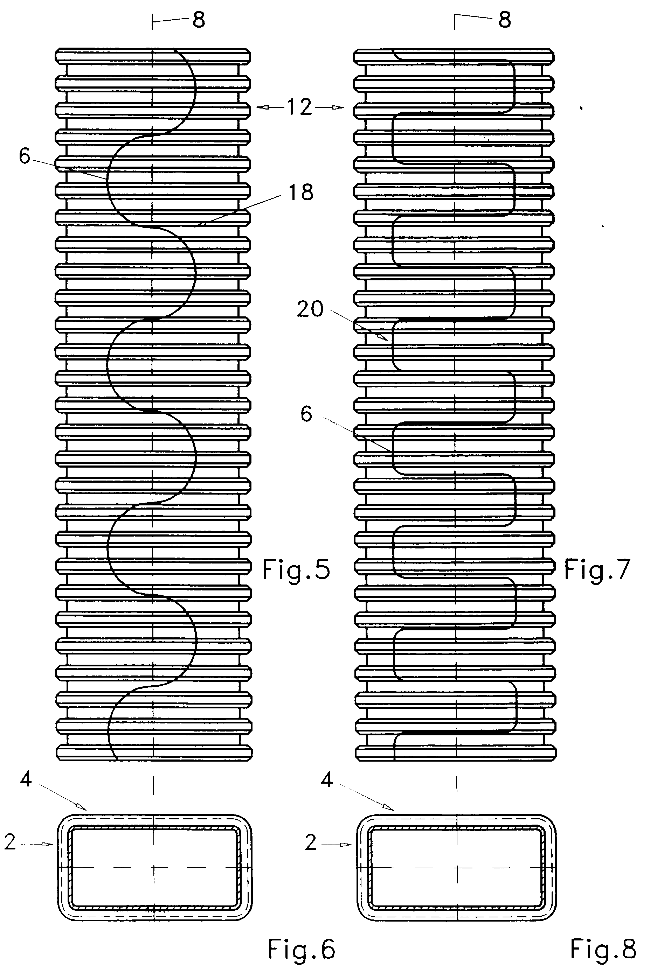

Bei den Rohren nach den Figuren 5 bis 8 handelt es sich um Wellenschläuche, die in bezug auf herkömmliche Schläuche eine höhere Stabilität aufweisen.

Die erfindungsgemäßen Rohre werden bevorzugt als Energieführungsleiter, ähnlich wie Energieführungsketten, in Schaltschränken sowie als Elektroinstallation eingesetzt.

Sie können jedoch auch innerhalb von Energieführungsketten untergebracht sein, wie sie z.B. in der DE-PS 35 16 448 C1 und 38 12 559 beschrieben sind.

Die Besonderheiten der vorgeschlagenen Erfindung besteht insbesondere darin, daß Rohre mit nicht geradlinigen und vorzugsweise schlangen- bzw. wellenförmigen Schlitzen zur Aufnahme von Kabeln, Leitungen oder Schläuchen verwendet werden können, wobei das Bestücken des Rohres ohne besonderes Werkzeug erfolgen kann, während das bestückte Rohr sich in bezug auf seine funktionsgemäße Verwendung - Schutz der aufgenommenen Leitungen, Kabeln, Schläuche oder auch weitere Rohre - so verhält, als wäre es nicht geschlitzt.

## Patentansprüche

1. Rohr (10,12) mit axialem Schlitz (14-20) und aus elastisch verformbarem Werkstoff,
dadurch gekennzeichnet,
daß der Schlitz (14-20) einen von einer Geraden verschiedenen Verlauf aufweist.

2. Rohr nach Anspruch 1,
dadurch gekennzeichnet,
daß der Schlitz (14-20) wellen- oder zick-zack-förmig ist.

3. Rohr nach Anspruch 1 oder 2,
dadurch gekennzeichnet,
daß die Längsmittelachse des Schlitzes (14-20) parallel zur Längsmittelachse (8) des Rohres (7-12) verläuft.

4. Rohr nach einem der Ansprüche 1 bis 3,
dadurch gekennzeichnet,
daß die Amplituden (6) der Wellen (14-20) sich über weniger als ein Viertel des Rohrumfangs erstrecken.

5. Rohr nach einem der Ansprüche 1 bis 4 mit einem in etwa rechteckförmigen Querschnitt,
dadurch gekennzeichnet,
daß der Schlitz (14-20) auf einer Seite (4) des Rohres ausgebildet ist.

6. Rohr nach einem der Ansprüche 1 bis 5,
dadurch gekennzeichnet,
daß das Rohr einen kreisrunden, ovalen oder N-eckförmigen Querschnitt aufweist.

7. Rohr nach einem der Ansprüche 1 bis 6,
dadurch gekennzeichnet,
daß das Rohr (12) ein Wellenschlauch ist.

8. Verwendung des Rohres nach einem der Ansprüche 1 bis 7 bei Energieführungsketten mit Kettengliedern, die parallel zueinander verlaufen und mittels Querstegen miteinander verbindbare Lasche sowie Verbindungsmitteln für die freien Enden der Querstangen aufweisen.
